# EUROPEAN PATENT SPECIFICATION

(11) **EP 1 530 209 B1**
(45) Date of publication and mention of the grant of the patent: **16.01.2008**
(21) Application number: 04025927.7
(22) Date of filing: 02.11.2004
(51) Int. Cl.: G11B 7/24, G11B 7/007

(54) **Optical recording medium and information-recording method**
Optisches Aufzeichnungsmedium und Verfahren zur Aufzeichnung von Informationen
Support d'enregistrement optique et procédé d'enregistrement optique

(30) Priority: 05.11.2003 JP 2003375291
(43) Date of publication of application: 11.05.2005
(73) Proprietor: FUJIFILM Corporation, Minato-ku Tokyo (JP)
(72) Inventor: Katayama, Kazutoshi, Odawara-shi Kanagawa (JP); Usami, Yoshihisa, Odawara-shi Kanagawa (JP)
(74) Representative: HOFFMANN EITLE

(56) References cited:
- EP-A- 0 467 716
- EP-A- 1 152 402
- EP-A- 1 291 869

## Description

### BACKGROUND OF THE INVENTION

### Field of the Invention

The present invention relates to an optical recording medium and to an information-recording method, and, particularly, to a write-once type optical recording medium and information-recording method, which enable major information and sub-information to be recorded and reproduced by means of laser light.

### Description of the Related Art

Media such as a compact disk-recordable (CD-R), a compact disk-rewritable (CD-RW), a digital versatile disk-recordable (DVD-R), a digital versatile disk-rewritable (DVD-RW) and a digital versatile disk random access memory (DVD-RAM) have been known as optical recording media which can record information by laser irradiation.

In all the above media excluding the CD-R and the CD-RW, an area called a burst cutting area is provided in which signals written as a series of low reflectance stripes in a circumferential direction (signals corresponding to sub-information) are recorded primarily with the aim of protection from copying (see, for example, Japanese Patent Application Laid-Open (JP-A) Nos. 10-188361, 10-233019, 2001-76345 and 2001-243634). In these cases, signals corresponding to matters such as copyright management information, including protection from copying, are output from these areas, a demonstration of the capacity to perform functions such as protection from copying.

These signals written as a series of low reflectance stripes in a circumferential direction (hereinafter referred to as "bar-code signals") are of a larger size than record reproducing signals (pits), and it is effective to use high-power and large-area laser light to record the bar-code signals.

In, for example, a phase-change type optical recording medium, laser light having a wavelength of 810 nm is used. In the case of a DVD-R, use of laser light having a wavelength of 650 nm has been explored, but this wavelength is the same as that used for reproducing a recording in a DVD-R.

Among optical recording media using short-wavelength laser lights, such as a blue laser light, (around 405 nm), in the case of phase-change type optical recording media sub-information can be recorded in the same manner as in the case of current media (DVD+/-RW), by means of a laser having a long wavelength.

However, in the case of the write-once type optical recording media using an organic dye in the recording layer, technologies for recording bar-code signals have not yet been established. If the same concept were adopted as in the case of the DVD+/-RW, a laser having a wavelength of 405 nm would accordingly be used to record. Current technologies, however, entail various practical problems, insofar that a high-power laser having a wavelength of 405 nm is expensive, and also that it takes a long time to record large-size bar-code signals.

### SUMMARY OF THE INVENTION

The present invention provides an optical recording medium which results in high productivity and has a high recording density, and which also demonstrates a high degree of reliability in the reproduction of sub-information.

In addition, the invention provides an information-recording method that enables sub-information to be recorded at a low cost, and within a short space of time.

Specifically, a first aspect of the invention is to provide an optical recording medium including a recording layer in which major information and sub-information are recorded, wherein the sub-information is recorded with the use of long-wavelength laser light having a wavelength longer by 30 nm or more than short-wavelength laser light used to record the major information; and an area where the sub-information is recorded has a level of absorbance of the long-wavelength laser light of 0.05 or more.

A second aspect of the invention is to provide an information-recording method using an optical recording medium comprising a recording layer in which major information and sub-information are recorded, wherein the major information is recorded with the use of short-wavelength laser light having a wavelength of 500 nm or less; and the sub-information is recorded with the use of long-wavelength laser light having a wavelength longer by 30 nm or more than the short-wavelength laser light.

### DETAILED DESCRIPTION OF THE INVENTION

The optical recording medium of the present invention includes a recording layer in which both major information and sub-information are recorded.

The term "major information" means in this context various types of information recorded by users and general information of the kind that is recorded in media such as CD-Rs and DVD-Rs.

In this context also, a short-wavelength laser (wavelength: 500 nm or less) is used to record major information with the aim of attaining a higher recording density than that achieved in conventional media such as conventional DVD-Rs. The wavelength of the short-wavelength laser light is preferably from 350 to 450 nm and more preferably from 390 to 420 nm.

Moreover, the term "sub-information" means in this context information such as designation information on authorized users, designation information on available periods, designation information on frequency of available times, rental information, resolution designation information, layer designation information, designation information on users, copyright owner information, copyright number information, information on manufacturers, date of manufacture information, date of sales information, sales store information or information on sales persons, information on number of sets in use, area designation information, language designation information, application designation information, product user information and information on numbers being used.

The sub-information is recorded in an area corresponding to a burst cutting area (BCA) in media such as DVDs (hereinafter referred to on occasions as an "area corresponding to BCA").

The "area corresponding to BCA" is an area in which designation information of an optical recording medium formed in media such as DVDs is recorded, and which has the same function as that of a BCA (burst cutting area). An area corresponding to BCA is located in a region 22 mm or more, and 24 mm or less, distant from the center of the optical recording medium.

An area corresponding to BCA is formed, by use of high power laser light such as a Yttrium Aluminum Garnet (YAG) laser light, or a carbon dioxide gas laser light, like a bar-code in a peripheral direction of a track within the innermost peripheral part of the track, such that the area extends over plural tracks.

At this time, the sub-information is recorded with the use of long-wavelength laser light having a wavelength longer by 30 nm or more than the short-wavelength laser light used to record major information. Long-wavelength laser devices have an advantage insofar that they are relatively inexpensive, and that sub-information can be recorded within a short period of time. As a method of recording sub-information, the aforementioned high-power laser light may be used, and conditions adopted for media such as conventional DVD-Rs may be applied. A rotational frequency of the optical recording medium when sub-information is recorded is preferably set within a range of 100 to 3000 r.p.m. By confining rotational frequency within the above range recording time is shortened and good-quality recordings can be obtained. The rotational frequency is more preferably 200 to 1500 r.p.m. and even more preferably 300 to 1000 r.p.m.

Blue-violet laser devices having a wavelength of 405 nm and a high power output are expensive, and they also reduce the productivity of the optical recording medium.

The level of absorbance of long-wavelength laser light by the medium in an area where sub-information is to be recorded is 0.05 or more.

If the level of absorbance is less than 0.05, since the degree of absorbance is too low, recording takes time, and productivity is lowered. On the other hand, when the level of absorbance is 0.05 or more, productivity is enhanced and the optical recording medium can demonstrate a degree of reliability (e.g., reliability in the prevention of illegal copying) on a par with that displayed by current optical recording media such as DVD-Rs.

The level of absorbance is preferably 0.07 or more, and more preferably 0.1 to 0.8.

In order to obtain a level of absorbance of 0.05 or more, the recording layer may be formed to contain a dye such that absorbance by the dye in the recording layer of long wavelength laser light having the above-mentioned wavelength is 0.05 or more. Plural types of dye may be used in combinations, as long as the total level of absorbance of these dyes in the recording layer is 0.05 or more. Details of these dyes will be explained later. The level of absorbance can be determined by calculating the difference in the level of absorbance between a laminate formed with a recording layer on a substrate and a single substrate.

The mark (bar-code recording part) formed when sub-information is recorded preferably has a length of from 5 to 50 µm in its longitudinal direction (circumferential direction). When a length in the longitudinal direction is within this range, a satisfactory reproduction signal width, and sufficient degree of track recording density, can be obtained. The length in the longitudinal direction is more preferably 10 to 30 µm.

A length in the direction of the width (radial direction) is preferably from 0.1 to 2 mm. When a length in a radial direction is within this range, tracking becomes satisfactory and the data area can be expanded. The length of the mark in the radial direction is more preferably 0.2 to 1 mm.

Typical examples of the structure of the optical information-recording medium of the invention include (1) a structure in which a recording layer, a reflecting layer, an adhesive layer, a dummy substrate and an optional printing layer are provided on a substrate (an HDDVD structure) and (2) a structure in which a reflecting layer, a recording layer, an adhesive layer and a transparent sheet (a light transmissible layer) are provided on a substrate (a blu-ray disk structure).

In these cases, for the purpose of improving characteristics such as adhesion, recording characteristics and storability, other layers such as an undercoat layer, an intermediate layer and a hardcoat layer may, as and when appropriate, be formed between the substrate and either the dummy substrate or the transparent sheet, or on the dummy substrate, or on the transparent sheet.

The substrate and each of the above layers in the optical information-recording medium of the invention will be explained taking as an example the structure of an HDDVD. However, it is not intended that the invention be limited by such examples.

### Substrate

Specific examples of the substrate material may include glass; polycarbonates; acryl resins such as a polymethylmethacrylate; vinyl chloride type resins such as a polyvinyl chloride and vinyl chloride copolymer; epoxy resins; amorphous polyolefins; polyesters; and metals such as aluminum. Two or more of these materials may, as desired, be used in combinations.

Among the above materials, from the viewpoint of moisture resistance, dimensional stability and low costs, polycarbonates and amorphous polyolefins are preferable, and polycarbonates are particularly preferable. The thickness of the substrate (the average thickness of the area where the recording layer is formed) is preferably in a range of from 0.1 to 0.7 mm.

On the substrate, tracking guide grooves, or irregularities that reflect information such as address signals, are formed. In order to achieve higher recording density, it is preferable to use a substrate on which grooves are formed at a track pitch which is narrower than in the case of CD-Rs and DVD-Rs.

The track pitch of the grooves is preferably in a range of from 200 to 500 nm and more preferably in a range of 350 to 450 nm.

Also, a depth of the groove (groove depth) is preferably within a range of from 20 to 120 nm. When a depth of the groove is within this range, a propensity for tracking error signals to become smaller, thus bringing about difficulties in tracking, is contained, and a propensity for molding to become difficult can also be contained. The depth is more preferably 25 to 110 nm.

The width of the groove is preferably confined within a range of from 50 to 250 nm. When the width of the groove is within this range, it becomes possible to reduce jitter, while at the same time containing the tendency for tracking error signals to become smaller. The width of the groove is more preferably confined within a range of from 70 to 230 nm and still more preferably from 90 to 200 nm.

For the purpose of enhancing flatness, and of improving adhesion, an undercoat layer may be formed on the surface of the substrate on the side at which the recording layer, which will be explained later, is formed.

Examples of materials for the undercoat layer may include polymer materials such as a polymethylmethacrylate, acrylic acid/methacrylic acid copolymer, styrene/maleic acid anhydride copolymer, polyvinyl alcohol, N-methylolacrylamide, styrene/vinyltoluene copolymer, polyethylene chlorosulfonate, nitrocellulose, polyvinyl chloride, chlorinated polyolefin, polyester, polyimide, vinyl acetate/vinyl chloride copolymer, ethylene/vinyl acetate copolymer, polyethylene, polypropylene and polycarbonate; and surface modifiers such as a silane coupling agent.

The undercoat layer may be formed by dissolving or dispersing materials listed above in an appropriate solvent to prepare a coating solution, and by then applying this coating solution to the surface of the substrate by means of a coating method such as spin coating, dip coating and extrusion coating. The thickness of the undercoat layer is within a range of 0.005 to 20 µm, and preferably within a range of 0.01 to 10 µm.

### Recording layer

The recording layer is formed on the substrate. The recording layer is preferably a dye type recording layer which contains a dye (organic dye). As such a dye, a dye can be used which, by virtue of being contained in the recording layer, enables major information to be recorded by a short-wavelength laser (wavelength: 500 nm or less) and which provides the recording layer with a level of absorbance of the above-mentioned long-wavelength laser light of 0.05 or more. As mentioned above, plural types of dye may be used in combinations.

Although organic dyes used for the recording layer may vary depending on the wavelength of the long-wavelength laser light with which sub-information is recorded, typical examples thereof include phthalocyanine compounds.

In a case where, for example, a wavelength used to record major information is 405 nm, and the wavelength of a long-wavelength laser used to record sub-information is from 600 to 700 nm, it is preferable to use a dye (dye (1)) represented by the following formula (1).

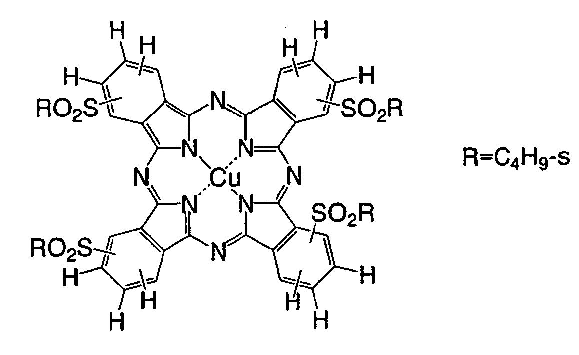

In a case where, for example, a wavelength used to record major information is 405 nm, and the wavelength of a long-wavelength laser used to record sub-information is from 500 to 550 nm, it is preferable to use a dye (dye (2) represented by the following formula (2).

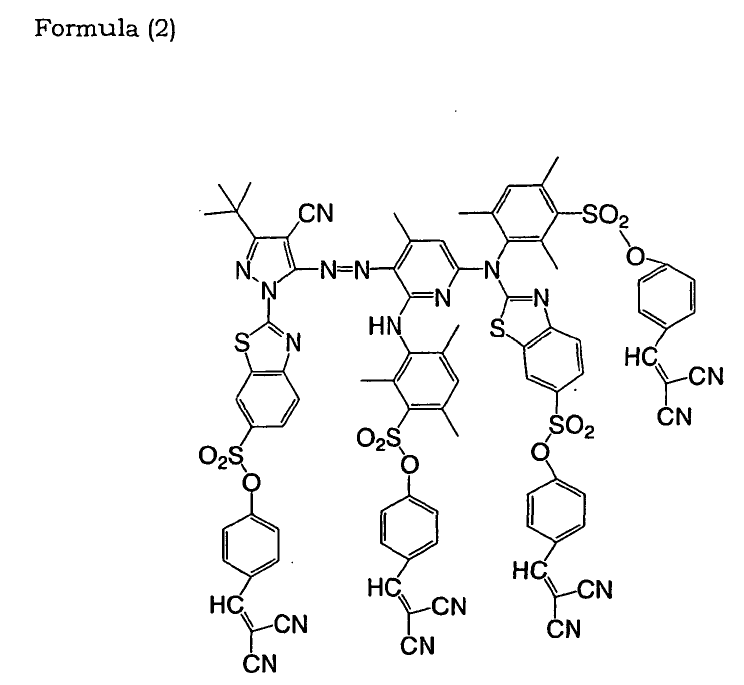

Further, organic compounds (organic dyes) such as a triazole compound, a triazine compound, a cyanine compound, a merocyanine compound, an aminobutadiene compound, a cinnamic acid compound, a viologen compound, an azo compound, an oxonol benzoxazole compound and a benzotriazole compound may also be used together as a material for the recording layer. Among these compounds, a cyanine compound, an aminobutadiene compound and a benzotriazole compound are particularly preferable.

The recording layer can be formed by dissolving in a appropriate solvent a recording material such as the above-mentioned organic dyes, together with a binder and the like, to prepare a coating solution, and by then applying this coating solution on the surface of the substrate, and drying the coating solution. The concentration of the recording material (e.g., the above-mentioned dye (1), or dye (2)) in the coating solution is generally in a range of from 0.01 to 15% by mass, preferably in a range of from 0.1 to 10% by mass, more preferably in a range of from 0.5 to 5% by mass and most preferably in a range of 0.5 to 3% by mass.

Examples of the solvent for the coating solution may include esters such as butyl acetate, ethyl lactate and cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as methylcyclohexane; ethers such as tetrahydrofuran, ethyl ether and dioxane; alcohols such as ethanol, n-propanol, isopropanol and n-butanoldiacetone alcohol; fluorine type solvents such as 2,2,3,3-tetrafluoropropanol; and glycol ethers such as ethylene glycol monomethyl ether, ethylene glycol monoethyl ether and propylene glycol monomethyl ether.

The above-mentioned solvents may be used either singly or in combinations of two or more taking into due account the solubility of the recording materials. Additives such as an anti-oxidant, an ultraviolet absorber, a plasticizer and a lubricant may further be added to the coating solution depending on the application.

When a binder is used, examples of the binder may include natural organic polymer materials such as a gelatin, cellulose derivative, dextran, rosin and rubber; hydrocarbon type resins such as a polyethylene, polypropylene, polystyrene and polyisobutylene; and synthetic organic polymers such as a vinyl type resin, e.g., a polyvinyl chloride, polyvinylidene chloride and polyvinyl chloride/polyvinyl acetate copolymer, an acryl resin, e.g., methyl polyacrylate and methyl polymethacrylate, and initial condensates of thermosetting resin, e.g., a polyvinyl alcohol, polyethylene chloride, epoxy resin, butyral resin, rubber derivative and phenol/formaldehyde resin. When a binder is used as one of the materials for the recording layer, in relation to the recording material the amount of binder used is generally in a range of 0.01 to 50 parts by mass and preferably in a range of 0.1 to 5 parts by mass. The concentration of the recording material in the coating solution prepared in this manner is generally in a range of from 0.01 to 10% by mass and preferably in a range of from 0.1 to 5% by mass.

Examples of the coating method may include a spraying method, a spin coating method, a dip coating method, a roll coating method, a blade coating method, a doctor roll method and a screen printing method. The recording layer may be either a mono-layer or multi-layer. The thickness of the recording layer is generally within a range of from 20 to 500 nm, preferably in a range of from 30 to 300 nm and more preferably in a range of from 50 to 250 nm.

The inside diameter of the recording layer formed is preferably equal to the diameter of a stack ring formed on the substrate. When a sucking disk is used in the handling of the substrate after the substrate has been molded, many cases occur where stains caused by contact with the sucking disk appear on the inside peripheral part of the substrate. Although these stains are not visible to the naked eye, they appear as cissing defects when the coating solution is applied. When these cissing defects appear, the inside peripheral part of the recording layer fails to form an complete circle and undulations appear, giving rise to a problem of an uneven outward appearance.

If, in these circumstances, the inside diameter of the recording layer to be applied is made equal to the diameter of a stack ring, when the two substrates are applied to each other the inside peripheral part of the recording layer can be seen through the stack ring, because on both sides it is sandwiched between the stack rings. This is advantageous insofar that it becomes difficult to notice the uneven outward appearance with the naked eye.

In order to improve the light fastness of the recording layer the recording layer may contain various anti-color fading agents.

Examples of anti-color fading agents include a singlet oxygen quencher which is generally used. Singlet oxygen quenchers described in publications such as published patent specifications may be utilized.

Specific examples of the singlet quencher may include those described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 4-25492, Japanese Patent Application Publication (JP-B) Nos. 1-38680 and 6-26028, the specification of German Patent No. 350399 and that described in the October 1992 issue of the Journal of the Japan Chemical Society, p.1141.

Relative to the amount of the dye the amount of an anti-color fading agent such as a singlet oxygen quencher is generally in a range of from 0.1 to 50% by mass, preferably in a range of from 0.5 to 45% by mass, more preferably in a range of from 3 to 40% by mass and particularly preferably in the range of 5 to 25% by mass.

### Reflecting layer

As the reflecting layer, a light reflecting material having a high reflectance of laser light can be used. Reflectance is preferably 70% or more.

Examples of a light-reflecting material having a high reflectance may include metals and semi-metals such as Mg, Re, Rh, Pt, Ag, Au, Zn, Al, Po, P and Sb. These light-reflecting materials may be used either singly (preferably 50% by mass or more and more preferably 70% by mass as a major component), or in combinations of two or more thereof, or as alloys. Preferable examples, among these materials, are Cr, Ni, Pt, Cu, Ag, Au, Al, Zn, Rh, Sb and stainless steel, particularly preferable examples are Au, Ag, Al or alloys thereof and most preferable examples are Ag or alloys using Ag as a major component (Ag: 50% by mass or more).

For the purpose of corrosion prevention the reflecting layer may contain, besides the above materials, C, N, O and metals and semi-metals such as B, Si, Sc, Ti; V, Cr, Mn, Fe, Co, Cu, Ni, Ga, Ge, Se, Sr, Y, Zr, Nb, Mo, Tc, Ru, Pd, Cd, In, Sn, Te, lanthanoid, Hf, Ta, W, Ir, Pb, Bi and Th. Among these materials, B, C, N, O, Si, Ti, Pb, Bi, Th, V, Cr, Co, Cu, Ni, Ge, Sr, Y, Zr, Nb, Mo, lanthanoid, Hf and W are preferable and C, N, O, Si, Cu, Mo, W and Bi are more preferable.

The reflecting layer may be formed on the recording layer by applying one or more of the above light-reflecting materials to the recording layer by vapor deposition, by sputtering or by ion plating. The thickness of the reflecting layer is generally within a range of from 10 to 300 nm and preferably within a range of from 50 to 200 nm.

As mentioned above, various kinds of intermediate layer may be formed between the substrate and the dummy substrate. For example, a barrier layer may be formed as the intermediate layer.

Any material may be used for constituting the barrier layer as long as it transmits laser light. However, dielectrics are preferably used. Specific examples thereof include inorganic oxides, nitrides and sulfides such as ZnS, ZnO, ZnO-Ga₂O₃, ZnO-Al₂O₃, TiO₂, SiO₂, ZnS-SiO₂, GeO₂, Si₃N₄, Ge₃N₄ and MgF₂. Preferable examples are ZnO-Ga₂O₃, ZnO-Al₂O₃, ZnS-SiO₂ and SiO₂. The barrier layer may be formed, for example, by sputtering or ion plating. The thickness of the barrier layer is preferably from 1 to 100 nm.

### Dummy substrate

As the dummy substrate, one made of the same material and having the same shape as the aforementioned substrate may be used. Although various adhesives may be used to laminate the dummy substrate, it is preferable to use an ultraviolet-ray curable resin as the adhesive. Examples of such an ultraviolet-ray curable resin include slow-acting type adhesives such as a cation-curable type epoxy resin, and spin-curable type adhesives such as an ultraviolet-ray curable acrylate resin. Thermosetting resins and pressure-sensitive adhesives may also be used. The adhesive may be provided on the reflecting layer, or on the laminate surface of the dummy substrate by a coating method such as spin coating. When an ultraviolet-ray curable resin is used, the dummy substrate may be laminated by application of ultraviolet rays according to well-known conditions.

An optical recording medium is thus manufactured by laminating the dummy substrate.

After the optical recording medium has been manufactured, as mentioned above, sub-information which is required is recorded with the use of a device such as a YAG laser, or a carbon dioxide gas laser, and the optical recording medium of the invention is thereby formed.

Also, in the case of a structure (a blu-ray disk structure) in which a reflecting layer, a recording layer, an adhesive layer and a transparent sheet (light-transmission layer) are formed on a substrate, materials for each layer except for the transparent sheet are the same as for those used in the structure of the HDDVD. The transparent sheet will be explained below. The thickness of this substrate is preferably in a range of from 1.1 ± 0.3 mm. Also, the track pitch is preferably from 250 to 350 nm.

### Transparent sheet (light-transmission layer)

The transparent sheet is formed for the purposes of protecting the inside of the optical recording medium from adverse effects such as for example contamination, damage and impacts, and for preventing the intrusion of moisture. Any material may be used for the transparent sheet without any particular limitation, as long as it is a transparent material. Preferable examples of the material used include a polycarbonate and cellulose triacetate, and a more preferable example thereof is a material of which the coefficient of moisture absorption is 5% or less at 23°C under 50% RH.

In this context, "transparent" means that the transparent sheet is transparent enough to transmit both recording light and reproducing light (transmittance: 90% or more).

The transparent sheet may be formed, for example, in the following manner. A photocurable resin is dissolved in an apropreate solvent to prepare a coating solution, and the coating solution thus obtained is applied to the recording layer, (or to the barrier layer when a barrier layer or the like is formed), at a predetermined temperature to form a coating film. A cellulose triacetate film (TAC film) obtained, for example, by extrusion processing of a plastic is laminated on the coating film and light is applied to the coating film from above the laminated TAC film to cure the coating film, thereby forming the transparent sheet. As the TAC film, TAC films containing a ultraviolet absorber are preferable. The thickness of the transparent sheet is in a range of from 0.01 to 0.2 mm, preferably in range of from 0.03 to 0.1 mm and more preferably in a range of from 0.05 to 0.095 mm.

As the transparent sheet, a polycarbonate sheet or the like may be used. Moreover, instead of the transparent sheet a light-transmittable layer containing an ultraviolet ray-curable resin or the like may be formed.

In order to control viscosity, the coating temperature is preferably in a range of from 23 to 50°C, more preferably in a range of from 24 to 40°C and still more preferably in a range of from 25 to 37°C.

In order to prevent warpage of the disk, it is preferable to irradiate the coating film with ultraviolet rays by using a pulse type illuminator (preferably a UV irradiator). Pulse intervals are of the order of preferably msec or less, and more preferably of µsec or less. No particular limitation is imposed on the amount of light to be applied per pulse, but the amount is preferably 3 kW/cm² or less, and more preferably 2 kW/cm² or less.

Also, there is no particular limitation on the number of times that irradiation can be applied to the coating film, but the number is preferably 20 or less, and more preferably 10 or less.

In a case where a pressure-sensitive adhesive is being applied to the laminated surface of the transparent sheet, the adhesive mentioned above becomes unnecessary.

Next, explanations will be given as to a method of recording major information in the optical recording medium of the invention and a method of reproducing the major information recorded.

The recording of major information in the optical recording medium is carried out, for example, in the following manner.

First, the optical recording medium is irradiated with recording laser light having a wavelength of 350 to 500 nm (preferably 400 to 440 nm) from the side of the transparent sheet, or from the side of the substrate opposite to the dummy substrate, while the optical recording medium is rotated at a constant linear velocity. The recording layer absorbs laser light as a result of being irradiated with the laser light, leading to a rise in temperature in part of the recording layer, with the result that a physical or chemical change takes place (e.g., the production of pits), and the optical characteristics of the recording layer are thereby changed. The major information is recorded by means of the change in optical characteristics.

Examples of a laser light source having an oscillation wavelength of from 350 to 500 nm may include a blue-violet semiconductor laser having an oscillation wavelength ranging from 390 to 415 nm and a blue-violet second harmonic generation (SHG) laser having a center oscillation wavelength of about 430 nm.

Further, in order to raise the level of recording density the numerical aperture (NA) of an objective lens used for a pickup is preferably 0.6 or more.

On the other hand, the major information recorded can be reproduced by irradiating the optical recording medium, through the surface from which the recording laser light is applied, with laser light of same wavelength as, or of a lower wavelength than, the laser light used to record the major information, while the optical recording medium is rotated at the same constant linear velocity as above, and by detecting the light which is reflected.

### EXAMPLES

The present invention will be hereinafter explained in detail by way of examples, which, however, are not intended to be limiting of the invention.

### (Example 1)

A 0.6-mm-thick substrate (outside diameter: 120 mm and inside diameter: 15 mm) was molded using a polycarbonate resin (PANLITE AD5503, manufactured by Teijin Chemicals Ltd.) by injection molding. The track pitch of the grooves formed on the substrate was 400 nm, the half-value width of the groove part was 200 nm and the depth of the grooves was 85 nm.

2.5 g of the dye (1) represented by the above-mentioned formula was added to 100 ml of TFP (2,2,3,3-tetrafluoropropanol). Supersonic wave was applied to this solution for 2 hours to dissolve the dye (1) further. Thereafter, the solution was allowed to stand in a condition of 23°C and 50% RH for 0.5 hours or more and then subjected to filtration with the use of a 0.2 µm filter. Using the solution obtained as a result of the filtration, a recording layer 140 nm in thickness was formed on the substrate by a spin coating method. The recording layer was applied in such a way that the inside diameter of the recording layer was made equal to the diameter of the stack ring disposed at the back of the substrate.

The level of absorbance by the laminate after a recording layer was formed, and the level of absorbance by a single substrate were measured with the use of a spectrophotometer (trade name: UV-3100PC, manufactured by Shimadzu Corporation). A wavelength region which includes a wavelength used in a BCA cutter, which will be explained later, was chosen as the wavelength region to be measured, and from out of all the data, the value of absorbance at the wavelength used in the BCA cutter was determined. Then, the level of absorbance in the area where sub- information was recorded was determined by subtracting the level of absorbance of the single substrate from the level of absorbance of the laminate after the recording layer was formed. The results are shown in the following Table 1.

After the recording layer was formed, the laminate was subjected to heat treatment performed in a 80°C clean oven for one hour.

A reflecting layer was formed to a thickness of 100 nm on the recording layer by a vacuum film-forming method using a target (APC) comprised of Ag (98.1 parts by mass), Pd (0.9 parts by mass) and Cu (1.0 part by mass). Input power was 2 kW and the flow rate of Ar was 5 sccm.

An ultraviolet curable resin (trade name: SD640, manufactured by Dainippon Ink and Chemicals, Incorporated) was applied on the reflecting layer, in the shape of an arc, 25 or more, and 30 or less mm distant from the center hole in a radial direction, while the laminate, in which the recording layer and the reflecting layer were formed in that order, was being rotated on the substrate at 60 r.p.m. A 0.6-mm-thick dummy substrate made of polycarbonates (the same as the substrate described above except insofar that grooves were not formed) was placed on top of the ultraviolet ray-curable resin. Thereafter, the laminate was rotated at 3000 r.p.m. to spread the ultraviolet ray-curable resin between the reflecting layer and the dummy substrate. Ultraviolet rays were then applied to laminate the dummy substrate, and an optical recording medium thereby produced.

The optical recording medium thus manufactured was then set to a BCA cutter (manufactured by Pulstec Industrial Co., Ltd., laser wavelength: 663 nm) to record bar-code signals (sub-information) by using a power of 0.28 W (the range where these signals were recorded was a range of from 22 mm to 24 mm distant from the center of the optical recording medium). The size of the record spot was as follows: length in a longitudinal (circumferential) direction was 0.9 µm and length in a width-wise (radial) direction was 35 µm. Also, the size of the signal was as follows: length in a longitudinal direction was 24 µm and length in a width-wise direction was 500 µm. The recording time was 30 seconds, rotation was 500 r.p.m. and the feed pitch was 10 µm.

The optical recording medium recording the bar-code signals was set to a DDU-1000 (manufactured by Pulstec Industrial Co., Ltd.) incorporating a laser optical system (NA (numerical aperture): 0.65) with a laser having a wavelength of 404 nm, and recorded signals were reproduced in conditions of a linear velocity of 6.5 m/ sec and a power of 0.5 mW. The waveforms thus reproduced were evaluated with the use of an oscilloscope. Specifically, the ratio of voltage of unrecorded portions (IBH) to the voltage of recorded portions (IBL) was calculated. Cases where the equation (IBL/IBH < 0.8) was satisfied were defined as "A", while the cases where this equation was not satisfied were defined as "B". The results are shown in Table 1 shown below.

### (Comparative Example 1)

The optical information recording medium was evaluated in the same manner as in Example 1, except insofar that when the bar-code signals were recorded, the wavelength of the BCA cutter (manufactured by Pulstec Industrial Co., Ltd.) was changed to 810 nm, a power of 2.7 W was used to record, the recording time was changed to 3 minutes and the size of the recording spot was altered (length in a longitudinal direction: 1 µm and length in a width-wise direction: 180 µm). The results are shown in Table 1 shown below.

### (Comparative Example 2)

An optical recording medium was manufactured and evaluated in the same manner as in Example 1 except that dye (1) was altered to dye (2). The results are shown in Table 1 shown below.

**Table 1**

| | Type of dye | Laser wavelength (nm) | Absorbance in the area where the sub-information is recorded | IBL/IBH | Evaluation |
|---|---|---|---|---|---|
| Example 1 | Dye (1 ) | 663 | 0.4 | 0.7 | A |
| Comparative example 1 | Dye (1) | 810 | 0.01 | non-recordable | B |
| Comparative example 2 | Dye (2) | 663 | 0.01 | non-recordable | B |
| * The laser wavelengths specified indicate the wavelengths used at the time that the sub-information is recorded. | | | | | |

In the case of the optical recording medium of Example 1, in which the wavelength used to record major information was 404 nm, dye (1) was contained in the recording layer, and the wavelength used to record sub-information was 663 nm, IBL/IBH was 0.7 and signals were accordingly clearly distinguishable from noises. On the other hand, in the case of the optical recording medium of Comparative Example 1, even though the dye (1) was contained in the recording layer, absorbance was low at the recording wavelength with which sub-information was recorded, and it was therefore impossible to record. Similarly, in the case of the optical recording medium of Comparative Example 2, even though the dye (1) was contained in the recording layer, absorbance was low at the recording wavelength with which the sub-information was recorded, and it was therefore impossible to record.

The invention provides an optical recording medium which results in high productivity and has a high recording density, and which also demonstrates a high degree of reliability in the reproduction of sub-information.

In addition, the invention provides an information-recording method that enables sub-information to be recorded at a low cost, and within a short space of time.

## Claims

1. A method of manufacturing an optical recording medium comprising a recording layer in which major information is recorded with use of short-wavelength laser light having a wavelength of 500 nm or less, the method comprising:
forming the recording layer on a substrate, and
recording sub-information in the recording layer with use of long-wavelength laser light having a wavelength longer by 30 nm or more than the short-wavelength laser light used for recording the major information.

2. The method according to claim 1, wherein the sub-information is recorded in an area corresponding to a burst cutting area (BCA).

3. The method according to claim 2, wherein the BCA area is in a region from 22 mm to 24 mm distant from the center of the optical recording medium.

4. The method according to any one of claims 1 to 3, wherein in the recording of the sub-information, a rotational frequency of the optical recording medium is from 100 to 3000 r.p.m.

5. The method according to any one of claims 1 to 4, further comprising forming a reflecting layer.

6. The method according to any one of claims 1 to 5, further comprising forming a dummy substrate.

7. The method according to any one of claims 1 to 6, wherein the wavelength of the long-wavelength laser light is from 600 to 700 nm.

8. The method according to any one of claims 1 to 6, wherein the wavelength of the long-wavelength laser light is 663 nm.

9. The method according to any one of claims 1 to 8, wherein an area where the sub-information is recorded has a level of absorbance of the long-wavelength laser light of 0.05 or more.

## Patentansprüche

1. Verfahren zur Erzeugung eines optischen Aufzeichnungsmediums, umfassend eine Aufzeichnungsschicht, worin eine Hauptinformation unter Verwendung von kurzwelligem Laserlicht mit einer Wellenlänge von 500 nm oder weniger aufgezeichnet ist, wobei das Verfahren umfasst:
Bildung einer Aufzeichnungsschicht auf einem Substrat, und
Aufzeichnung von Sub-Information in der Aufzeichnungsschicht unter Verwendung von langwelligem Laserlicht mit einer Wellenlänge, die um 30 nm oder mehr länger ist als das kurzwellige Laserlicht, das zur Aufzeichnung der Hauptinformation verwendet wird.

2. Verfahren nach Anspruch 1, worin die Sub-Information in einer Fläche aufgezeichnet wird, die einer Explosionsschnittfläche (BCA) entspricht.

3. Verfahren nach Anspruch 2, worin die BCA-Fläche in einem Bereich von 22 bis 24 mm Abstand von der Mitte des optischen Aufzeichnungsmediums ist.

4. Verfahren nach einem der Ansprüche 1 bis 2, worin bei der Aufzeichnung der Sub-Information eine Rotationsfrequenz des optischen Aufzeichnungsmediums von 100 bis 3.000 Upm ist.

5. Verfahren nach einem der Ansprüche 1 bis 4, weiterhin umfassend die Bildung einer Reflexionsschicht.

6. Verfahren nach einem der Ansprüche 1 bis 5, weiterhin umfassend die Bildung eines Dummysubstrates.

7. Verfahren nach einem der Ansprüche 1 bis 6, worin die Wellenlänge des langwelligen Laserlichts von 600 bis 700 nm ist.

8. Verfahren nach einem der Ansprüche 1 bis 6, worin die Wellenlänge des langwelligen Laserlichts 663 nm ist.

9. Verfahren nach einem der Ansprüche 1 bis 8, worin eine Fläche, bei der die Sub-Information aufgezeichnet wird, ein Niveau der Absorbanz des langwelligen Laserlichts von 0,05 oder mehr hat.

## Revendications

1. Procédé de fabrication d'un support d'enregistrement optique comprenant une couche d'enregistrement dans laquelle l'information majeure est enregistrée en utilisant une lumière laser de courte longueur d'ondes ayant une longueur d'ondes de 500 nm ou moins, le procédé comprenant :
la formation de la couche d'enregistrement sur un substrat, et
l'enregistrement d'une sous-information dans la couche d'enregistrement en utilisant une lumière laser de longue longueur d'ondes ayant une longueur d'ondes plus longue de 30 nm ou plus que la lumière laser de courte longueur d'ondes utilisée pour l'enregistrement de l'information majeure.

2. Procédé d'enregistrement selon la revendication 1, dans lequel la sous-information est enregistrée dans une zone correspondant à une région de découpage d'éclat (BCA).

3. Procédé d'enregistrement selon la revendication 2, dans lequel la région BCA est une région de 22 mm à 24 mm de distance du centre du support d'enregistrement optique.

4. Procédé d'enregistrement selon l'une quelconque des revendications 1 à 3, dans lequel, dans l'enregistrement de la sous-information, une fréquence de rotation du support d'enregistrement optique est de 100 à 3000 t/min.

5. Procédé d'enregistrement selon l'une quelconque des revendications 1 à 4, comprenant en outre la formation d'une couche réfléchissante.

6. Procédé d'enregistrement selon l'une quelconque des revendications 1 à 5, comprenant en outre la formation d'un substrat pâteux.

7. Procédé d'enregistrement selon l'une quelconque des revendications 1 à 6, dans lequel la longueur d'onde de la lumière laser de longue longueur d'onde va de 600 à 700 nm.

8. Procédé d'enregistrement selon l'une quelconque des revendications 1 à 6, dans lequel la longueur d'onde de la lumière laser de longue longueur d'onde est de 663 nm.

9. Procédé d'enregistrement selon l'une quelconque des revendications 1 à 8, dans lequel une région où la sous-information est enregistrée possède un taux d'absorbance de la lumière laser de longue longueur d'onde de 0,05 ou plus.
